# EUROPÄISCHE PATENTANMELDUNG

(11) **EP 1 304 236 A1**
(43) Veröffentlichungstag der Anmeldung: **23.04.2003**
(21) Anmeldenummer: 01125011.5
(22) Anmeldetag: 19.10.2001
(51) Int. Cl.: B44C 1/17, B05D 3/12, B05D 3/02, B29C 59/02

(54) **Verfahren zum Erzeugen einer strukturierten Lackschicht**

(71) Anmelder: MZE Engineering GmbH, 26160 Bad Zwischenahn (DE)
(72) Erfinder: Zaher, Maximilian, 26160 Bad Zwischenahn (DE)
(74) Vertreter: von Hellfeld, Axel, Dr. Dipl.-Phys.

(57) **Zusammenfassung**

Ein Verfahren zum Herstellen eines Spritzgussformteils mit strukturierter Lackschicht sieht vor, dass ein Lack mit einer thermisch härtbaren Komponente und einer mit UV-Strahlung härtbaren Komponente verwendet wird. Dieser Lack wird auf eine Folie 10 mit "Release"-Eigenschaft aufgebracht und dort mit einer Struktur S geprägt, z. B. in der Art von Leder oder Holz o. dgl. Danach wird auf die strukturierte Lackschicht 14 eine Farbdekorschicht aufgetragen. Die Folie mit den genannten Schichten wird in einem Spritzgießwerkzeug positioniert und mit einem Kunststoff hinterspritzt. Das so erzeugte Spritzgießformteil ist mit der Farbdekorschicht versehen und darüber einer strukturierten Lackschicht.

## Beschreibung

Die Erfindung betrifft ein Verfahren zum Erzeugen einer strukturierten Lackschicht auf einem Gegenstand.

Üblicherweise werden Produkte und Gegenstände aller Art, insbesondere auch Kunststoffprodukte, mit einer Lackschicht versehen, um bestimmte Eigenschaften der Oberfläche des Produktes zu verbessern, z. B. die optischen, ästhetischen, mechanischen, oder haptischen Eigenschaften.

Zur Übertragung von Lackschichten und Farbschichten ist die sog. "Release"-Technik bekannt (z. B. EP 0 573 676 A1). Als flächige Träger mit "Release"-Eigenschaft kommen insbesondere im Stand der Technik in Betracht bestimmte Papiere und Kunststofffolien, die an ihrer Oberfläche so gestaltet bzw. präpariert sind, dass aufgetragene Lackschichten und ggf. Farbschichten in der Art eines "Abpellens" wie ein Abziehbild auf ein Substrat übertragbar sind.

Es ist ein Verfahren zum Herstellen eines dekorierten Spritzgussformteils entwickelt worden (vgl. nicht vorveröffentlichte europäische Patentanmeldung, AnmeldeNr.: 00 116 183.5), bei dem eine tiefziehfähige Folie mit "Release"-Eigenschaft und einer darauf aufgetragenen Farbdekorschicht in einem Spritzgusswerkzeug vor einer Kavität, deren Form der des herzustellenden Formteils entspricht, angeordnet wird, wonach dann die Folie mit einem Kunststoff hinterspritzt wird und das so erzeugte Formteil und die Folie voneinander getrennt werden, wobei sich die Farbdekorschicht am Formteil haftend von der Folie löst. Dabei wird bevorzugt eine Lackschicht auf der Folie unter der Farbdekorschicht aufgetragen, die sich mit der Farbdekorschicht von der Folie löst. Am letztlich so erzeugten, beschichteten Formteil liegt die Farbdekorschicht direkt auf dem Formteil und die Lackschicht außen darüber.

Der vorliegenden Erfindung liegt die Aufgabe zugrunde, ein Verfahren bereitzustellen, mit dem eine Lackschicht auf einem Produkt strukturierbar ist. Unter "Strukturierbarkeit" ist hier eine Feinstruktur in der äußeren Oberfläche der Lackschicht zu verstehen, etwa die Struktur von Leder oder Holz etc. Die erzeugte Oberflächenstruktur kann optisch-ästhetisch und/oder technisch-funktional sein. Z. B. kann Ziel der Strukturierung sein eine regelmäßige geometrische Formgebung für z. B. bestimmte Lichtreflektionen, oder es können auch funktionale Strukturen angestrebt werden, wie eine bestimmte Haptik (Griffigkeit), z. B. ein sog. "Soft-Touch" (weicher Griff) oder dergleichen.

In seiner allgemeinsten Ausgestaltung sieht das erfindungsgemäße Verfahren zum Erzeugen einer strukturierten Lackschicht auf einem Gegenstand vor, dass eine Lackschicht verwendet wird, die zumindest zwei Lackkomponenten enthält, nämlich eine erste Lackkomponente, die mit einem ersten Härteverfahren härtbar ist, und eine zweite Lackkomponente, die mit einem zweiten Härteverfahren härtbar ist, das vom ersten verschieden ist, wobei zuerst die erste Lackkomponente mit dem ersten Härteverfahren so gehärtet wird, dass sie strukturierbar ist, wonach die Oberfläche der Lackschicht formgebend strukturiert wird im obigen Sinne, und schließlich die zweite Lackkomponente mit dem zweiten Härteverfahren gehärtet wird.

Die vorstehend genannte Zwei-Komponenten-Technik ermöglicht, dass die Lackschicht nach der Härtung der ersten Lackkomponente formgebend strukturiert wird, d. h. in die Oberfläche der Lackschicht, die hinreichend stabil ist, kann im obigen Sinne eine Struktur eingeprägt werden, z. B. auf mechanischem Wege durch einen Prägezylinder oder eine Prägeplatte. Danach ist die Lackschicht aber aufgrund der noch nicht ausgehärteten zweiten Komponente noch so weich, dass sie unter Formanpassung auf einen dreidimensional geformten Gegenstand auftragbar ist, sich also an die Form des dreidimensionalen Gegenstandes anpassen kann aufgrund ihrer Weichheit. Es hat sich gezeigt, dass dabei die geprägte Oberflächenstruktur in der Lackschicht erhalten werden kann, also auf dem letztlich erzeugten Produkt vorhanden ist. Die volle Härte der Lackschicht wird erreicht durch Aushärtung der zweiten Lackkomponente.

Bevorzugt ist das erste Härteverfahren bezüglich der ersten Lackkomponente ein UV-Strahlungshärten und das zweite Härteverfahren ist eine thermische Härtung. Die zweite Lackkomponente kann dabei so chemisch eingestellt werden, dass die thermische Härtung mit der Zeit auch schon bei leicht angehobenen Temperaturen oder sogar schon bei Zimmertemperatur (über mehrere Stunden oder Tage) erfolgt.

Besonders bevorzugt wird das Verfahren gemäß einer Weiterentwicklung der oben erwähnten Spritzgusstechnik eingesetzt. Dabei wird die Lackschicht mit den zumindest zwei Lackkomponenten in ungehärtetem Zustand auf eine Folie aufgetragen, die "Release"-Eigenschaft hat. Auf der Folie wird die erste Lackkomponente mit dem ersten Härteverfahren zumindest so weit gehärtet, dass danach die Lackschicht im oben beschriebenen Sinn strukturierbar ist. Diese formgebende Strukturierung der Oberfläche der Lackschicht wird anschließend durchgeführt. Es kann dann gegebenenfalls auf die so strukturierte Lackschicht ein Farbdekor aufgetragen werden, z. B. auch in "Release"-Technik. Die so erzeugte Folie mit Lackschicht und gegebenenfalls Farbdekorschicht wird dann in einem Spritzgusswerkzeug in einer Kavität angeordnet, deren Form der des herzustellenden Formteils (Produktes) entspricht. Anschließend wird die Folie mit einem Kunststoff hinterspritzt. Dabei legt sich die Folie mit der Farbdekorschicht und der Lackschicht eng auf die Oberfläche des erzeugten Formteils und der Druck bewirkt, dass die Strukturierung der Oberfläche der Lackschicht auf die andere Seite der Lackschicht "durchschlägt" (übertragen wird). Danach (nach Öffnung des Spritzgusswerkzeuges) kann dann die Folie abgezogen werden und das erzeugte Spritzgussformteil ist mit einem Farbdekor versehen und einer strukturierten Lackschicht über dem Farbdekor. Die vollständige Aushärtung der Lackschicht erfolgt durch Aushärtung der zweiten Lackkomponente gemäß dem zweiten Härteverfahren, z. B. einer thermischen Härtung, die aber auch bereits schon aufgrund der Temperaturen im Spritzgusswerkzeug gegen Ende des Prozesses durchgeführt werden kann.

Das Mengenverhältnis (Mischungsverhältnis) der verschiedenen Lackkomponenten in der oben beschriebenen Lackmischung richtet sich nach den Anforderungen, die an die letztlich hergestellte strukturierte Lackschicht gestellt werden, insbesondere den mechanischen Anforderungen wie Abriebfestigkeit, Kratzfestigkeit, Härte, Elastizität etc. Bei Verwendung zweier Lackkomponenten, von denen eine thermisch härtbar und die andere UVhärtbar ist, haben sich Mischungsverhältnisse (in Gewichtsprozenten) von thermisch härtbarem Lack zu UV-härtbarem Lack im Bereich von 20:80 bis 60:40 bewährt, je nach den Anforderungen.

Die thermische Aushärtung des Lackes kann z. B. bei Temperaturen von 60 bis 80°C erfolgen. Es ist auch möglich, einen thermisch schon bei Zimmertemperaturen aushärtbaren Lack zu wählen (z. B. in wenigen Tagen).

Das Verfahren ermöglicht insbesondere die Erzeugung einer strukturierten Lackschicht mit sehr hoher Abriebfestigkeit (mehr als 10-fach besser als im Stand der Technik).

Die beschriebene Prägetechnik für die Oberfläche ermöglicht feinste Prägestrukturen, die beim Spritzguss voll erhalten bleiben, d. h. die Brisanz, die geometrische Auflösung der Feinstrukturen wird erhalten, z. B. bis hin zu Feinstrukturen im Bereich von 10 bis 15 µm, je nach Lackschichtdicke. Bevorzugt werden Lackschichtdicken im Bereich von 5 bis 30 µm eingesetzt und die Prägestrukturen (hinsichtlich Tiefe und Abmessung der Strukturen in der Oberflächenebene) können sich ebenfalls in diesem Bereich befinden. Mit anderen Worten: Das Verfahren ermöglicht eine extrem hohe geometrische Auflösung (Feinstruktur) der eingeprägten Oberflächenstrukturen.

Die verwendete "Release"-Folie ist tiefziehfähig in dem Sinne, dass sie stark mittels einer Druckdifferenz oder injizierter, heißer Kunststoffmasse verformbar ist. Für die Folie können technische Thermoplaste verwendet werden, z. B. Polyester, PVA, Polypropylen etc.

Die Folie enthält bevorzugt einen hohen Anteil an sog. Weichmachern. Es hat sich gezeigt, dass der Zusatz von Weichmachern die Temperaturbeständigkeit der "Release"-Folie nicht beeinträchtigt. Es werden Folien verwendet mit einer Temperaturbeständigkeit bis zu 400°C.

Gemäß einer bevorzugten Ausgestaltung der Erfindung wird für das Farbdekor eine Farbe verwendet, die im hinterspritzten Kunststoff oder auch im Lack diffundieren kann. Die Verwendung einer derart diffusionsfähigen Farbe im Dekor hat den Vorteil, dass die Dekoration im Endprodukt eine sehr hohe Brillanz aufweist.

Sowohl die Lackschicht als auch die Farbdekorschicht können mit der Release-Technik auf die Folie aufgebracht werden.

Nachfolgend werden Einzelheiten der Erfindung mit Blick auf die Zeichrung näher beschrieben. Es zeigt:
Figur 1A eine Folie mit darauf aufgetragener Lackschicht und mit einem Prägezylinder;
Figur 1B eine Folie mit geprägter Lackschicht und darauf aufgetragener Farbdekorschicht;
Figur 2 schematisch eine Vorrichtung, mit der ein dekoriertes und strukturiert lackiertes Spritzgussformteil herstellbar ist;
Figur 3 einen Ausschnitt von Figur 2 in vergrößertem Maßstab; und
Figur 4 ein fertiges Spritzgussformteil mit Farbdekorschicht und Lackschicht.

Gemäß Figur 1A wird eine Folie 10 aus z. B. einem technischen Thermoplast, wie Polyester, Polypropylen, oder PVA, mit einer Lackschicht 14 versehen. Die Lackschicht 14 enthält zumindest zwei unterschiedliche Lackkomponenten, zum einen eine thermisch härtbare Lackkomponente und zum anderen eine mit UV-Strahlung härtbare Lackkomponente. Das Mischungsverhältnis von thermisch härtbarem Lack zu UV-härtbarem Lack beträgt (in Gewichtsprozenten) 20:30 bis 60:40, je nach den Anforderungen an die letztlich herzustellende Lackschicht.

Ziel des Verfahrens ist die Erzeugung einer strukturierten, d. h. in ihrer Oberfläche geformten Lackschicht. Hierzu dient ein Prägezylinder Z, der mit einer Struktur S versehen ist. In Figur 1A ist die Struktur S schematisch zick-zack-förmig über einen Teil des Umfanges des Prägezylinders Z gezeigt (tatsächlich erstreckt sich die Strukturierung über den gesamten Umfang des Prägezylinders). Rollt der Prägezylinder Z gemäß dem Pfeil über die Oberfläche der Lackschicht 14, wird die Lackschicht 14 geprägt. Damit die Lackschicht 14 die Prägung annimmt, ist zuvor diejenige Lackkomponente, die mit UV-Strahlung aushärtbar ist, gehärtet worden. Gleichwohl bewirkt diese Härtung nicht, dass die Lackschicht 14 insgesamt spröde und hart wird. Vielmehr bleibt sie weich und verformbar durch die noch nicht gehärteten Lackanteile, also die thermisch (später) aushärtbaren Lackkomponenten. Die UV-Härtung bewirkt aber, dass die Prägung stabil von der Lackschicht angenommen wird.

Der vergrößerte Ausschnitt von Figur 1A zeigt das Ergebnis, nämlich die Folie 10 mit der geprägten Lackschicht 14.

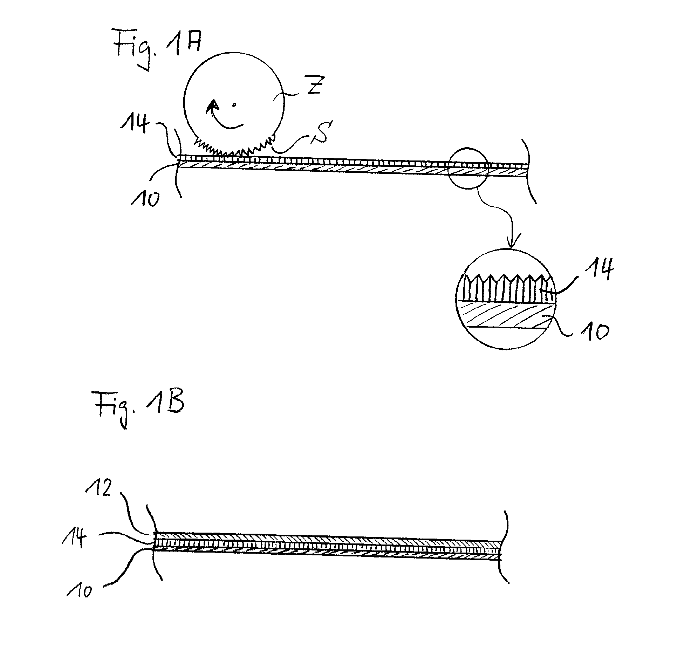

Gemäß Fig. 1B kann eine Farbdekorschicht 12 über die Lackschicht 14 aufgetragen werden, z. B. mit der "Release"-Technik von einem Träger (nicht gezeigt). Diese "Release"-Technik ist als solche bekannt.

Die Folie 10 enthält bevorzugt einen hohen Anteil an Weichmachern, ohne ihre Temperaturbeständigkeit bis zu 400°C zu verlieren. Insbesondere hat sich ein Weichmacheranteil (plasticyzer) von 5 bis 20 Gewichtsprozenten in der Folie bewährt, je nach Anwendung. Die Stärke der Folie 10 liegt bei 5 bis 50 µm.

Die in Figur 1B gezeigte Folie 10 mit darauf aufgetragener, geprägter Lackschicht 14 und darüber aufgetragenem Farbdekor 12 ist geeignet für das nachfolgend beschriebene Verfahren zum Herstellen eines dekorierten Spritzgussformteils. Dabei braucht die Farbdekorschicht 12 sich noch nicht genau an die geprägte Struktur in der Lackschicht 14 angepasst zu haben. Diese Anpassung erfolgt später.

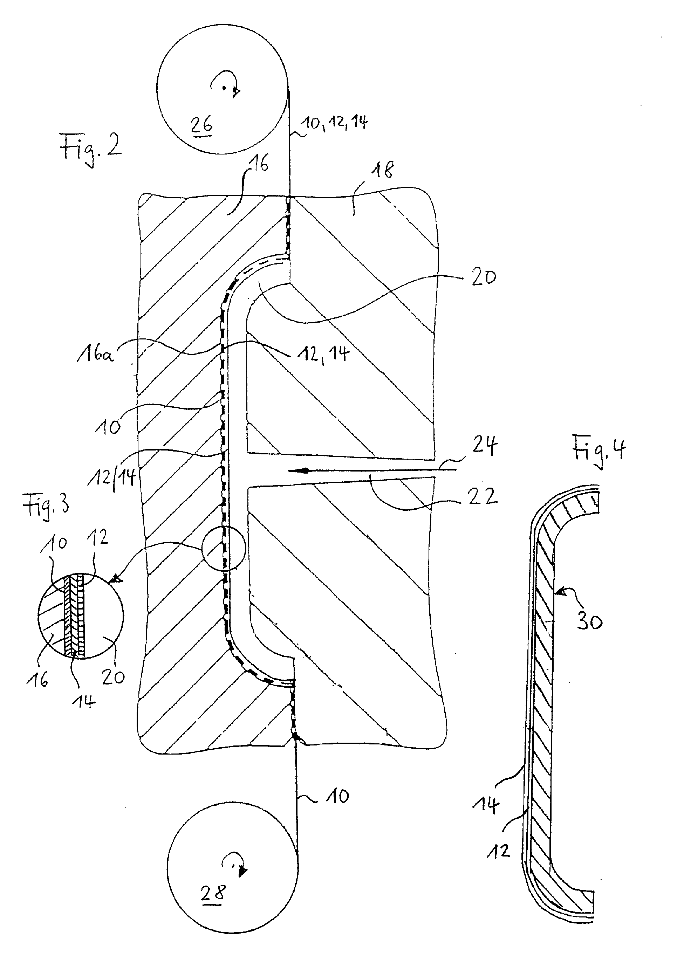

Figur 2 zeigt eine Vorrichtung, mit der das Verfahren durchführbar ist. Ein als solches bekanntes Spritzgießwerkzeug weist zwei Spritzgießformen 16, 18 auf, die relativ zueinander bewegbar sind. Zwischen den Formen 16, 18 wird in bekannter Weise ein Hohlraum 20 gebildet und flüssiger Kunststoff wird durch einen Kanal 22 entsprechend dem Pfeil 24 in den Hohlraum 20 injiziert. Dies erfolgt mit hohem Druck und hohen Temperaturen, in an sich bekannter Spritzgusstechnik.

Die oben beschriebene Folie 10, die mit einer geprägten Lackschicht 14 und darauf einer Farbdekorschicht 12 versehen ist, wird von einer Rolle 26 abgerollt. Sind die Spritzgießformen 16, 18 voneinander beabstandet (nicht gezeigt), lässt sich die Folie durch das Werkzeug, in Figur 2 also von oben nach unten, führen und auf der Unterseite auf eine weitere Rolle 28 wieder aufrollen. Dabei nimmt die Rolle 28 die Folie 10 auf, von der das Farbdekor 12 und der Lack 14 im Prozess entfernt worden sind, wie nachfolgend näher beschrieben ist.

Die von der Rolle 26 abgerollte Folie 10 mit dem Farbdekor 12 und dem Lack 14 wird im Spritzgießwerkzeug 16, 18 positioniert, wie in Figur 2 gezeigt ist. Dabei nehmen die Schichten die in Figur 3 näher gezeigte Anordnung ein. Die Folie 10 liegt also beim Spritzgießvorgang direkt an der Wand der Kavität 16a der Spritzgießform 16 an. Über der Folie 10 liegt die Lackschicht 14 und über der Lackschicht 14 die Farbdekorschicht 12. Das injizierte heiße Kunststoffmaterial kommt also direkt mit der Farbdekorschicht 12 in Kontakt und verbindet sich damit. Durch den Zusatz von starken Weichmachern in hoher Konzentration im Material der Folie 10 wird erreicht, dass sich die Folie 10 (und die darauf befindliche strukturierte Lackschicht sowie die Farbdekorschicht) auch an starke 3-dimensionale Verformungen der Kavität 16a anpassen können. Die Folie 10 presst sich gegen die Kavität 16a unter Druck und Temperatur des eingespritzten Kunststoffes an, wobei in einem Temperaturbereich von 150°C bis 300°C bevorzugt gearbeitet wird.

Es hat sich gezeigt, dass die oben beschriebene Prägung der Lackschicht sich beim Spritzgießen von der einen Seite der Lackschicht auf die andere "durchdrückt", d. h. auf der Außenseite (in Figur 2 also links) erhalten bleibt.

Aufgrund der "Release"-Eigenschaft der Folie 10 kann diese nach dem Hinterspritzen in einfacher Weise abgelöst und auf die untere Rolle 28 aufgewickelt werden.

Figur 4 zeigt das so entstandene Formteil 30 mit einer Farbdekorschicht 12 und darüber einer Lackschicht 14, wobei die Lackschicht 14 auf ihrer äußeren Oberfläche in der oben beschriebenen Weise strukturiert (geformt) ist, z. B. in der Art von Leder oder Holz.

Wird eine geeignete, diffusionsfähige Farbe verwendet, diffundiert diese bei den gegebenen Temperaturen direkt im Kunststoff des Formteils 30.

## Patentansprüche

1. Verfahren zum Erzeugen einer strukturierten Lackschicht (14) auf einem Gegenstand (30), bei dem eine Lackschicht (14) verwendet wird, die zumindest eine erste Lackkomponente enthält, die mit einem ersten Härteverfahren härtbar ist, und eine zweite Lackkomponente, die mit einem zweiten, anderen Härteverfahren härtbar ist, wobei zuerst die erste Lackkomponente mit dem ersten Härteverfahren so gehärtet wird, dass die Lackschicht strukturierbar ist, danach die Lackschicht (14) formgebend strukturiert wird, und danach die zweite Lackkomponente mit dem zweiten Härteverfahren gehärtet wird.

2. Verfahren nach Anspruch 1, **dadurch gekennzeichnet, dass** das erste Härteverfahren ein Strahlungshärten, insbesondere mit UV-Strahlung ist.

3. Verfahren nach einem der Ansprüche 1 oder 2, **dadurch gekennzeichnet, dass** das zweite Härteverfahren ein thermisches Härten ist.

4. Verfahren nach einem der vorhergehenden Ansprüche, **dadurch gekennzeichnet, dass** die Lackschicht in ungehärtetem Zustand auf eine Folie (10) mit "Release"-Eigenschaft aufgebracht wird, dass auf der Folie (10) die erste Lackkomponente mit dem ersten Härteverfahren so gehärtet wird, dass die Lackschicht strukturierbar ist, danach die Lackschicht (14) formgebend strukturiert wird, dass die Lackschicht (14) von der Folie (10) auf den Gegenstand (30) übertragen wird und danach die zweite Lackkomponente mit dem zweiten Härteverfahren gehärtet wird.

5. Verfahren nach Anspruch 4, **dadurch gekennzeichnet, dass** die Folie (10) nach Härtung der ersten Lackkomponente in einer Spritzgussform (16, 18) hinterspritzt wird.

6. Verfahren nach Anspruch 5, **dadurch gekennzeichnet, dass** beim oder nach dem Hinterspritzen die Härtung der zweiten Lackkomponente erfolgt.

7. Verfahren nach einem der vorhergehenden Ansprüche, **dadurch gekennzeichnet, dass** nach der formgebenden Strukturierung der Lackschicht (14) und vor ihrer Übertragung auf den Gegenstand ein Farbdekor (12) auf die Lackschicht aufgebracht wird.

8. Verfahren nach den Ansprüchen 2 und 3, **dadurch gekennzeichnet, dass** das Mengenverhältnis der thermisch härtbaren Lackkomponente zur strahlungshärtbaren Lackkomponente im Bereich von 20:80 bis 60:40 liegt.
